# EUROPEAN PATENT SPECIFICATION

(11) **EP 2 540 895 B1**
(45) Date of publication and mention of the grant of the patent: **14.05.2014**
(21) Application number: 12172760.6
(22) Date of filing: 20.06.2012
(51) Int. Cl.: D06F 33/02, D06F 39/00, D06F 58/20, D06F 29/00

(54) **Heat pump coupled washer and dryer pair**
An eine Wärmepumpe angeschlossenes Wasch- und Trocknerpaar
Machine à laver et sèche-linge couplés avec pompe à chaleur

(30) Priority: 27.06.2011 US 201113169290
(43) Date of publication of application: 02.01.2013
(73) Proprietor: WHIRLPOOL CORPORATION, Benton Harbor Michigan 49022 (US)
(72) Inventor: Beihoff, Bruce C., 21025 Comerio (IT); Cur, Nihat O., 21025 Comerio (IT); Dunsbergen, Kirk M., 21025 Comerio (IT); Luckman, Joel A., 21025 Comerio (IT); Sunshine, Richard A., 21025 Comerio (IT); Xie, Tao, 21025 Comerio (IT)
(74) Representative: Guerci, Alessandro

(56) References cited:
- DE-A1- 2 161 495
- US-A1- 2011 041 564

## Description

### SUMMARY OF THE INVENTION

An embodiment of the present invention is generally directed toward an appliance system that includes an appliance group where the appliance group has at least two appliances including: a first appliance designed to perform a first consumer function related to the first appliance; a second appliance that is separate from the first appliance where the second appliance is designed to perform a second consumer function related to the second appliance; and a thermal energy generator. A thermal energy generator, according to an embodiment of the present invention heats at least one thermal energy bearing fluid, typically a liquid or gas, and the thermal energy generator is operably connected to the first appliance and the second appliance. The thermal energy generator typically delivers thermal energy to the first and second appliance simultaneously or at different times via one or more of the thermal energy bearing fluids.

Another embodiment of the present invention is generally directed toward an appliance system that includes a washer and dryer group where the washer and dryer each use a separate and independent chamber for processing fabric materials and a heat pump. The heat pump supplies thermal energy to both the washer and dryer.

Yet another embodiment of the present invention is generally directed toward a method of delivering and distributing thermal energy between at least two appliances using a thermal energy generator operably connected to the at least two appliances and one or a plurality of thermal energy bearing fluids. The thermal energy bearing fluids typically transfer thermal energy between the thermal energy generator and the first and second appliances. US 2011/041564 Al discloses an appliance system and a method of reducing energy consumption of an appliance system according to the preamble of attached independent claims.

The thermal energy generator may be a water heater. The water heater includes a first inlet, second inlet, and an outlet, the first inlet in fluid communication with a utility water supply, the outlet and second inlet in fluid communication with the appliance group. Thermal bearing fluids, in particular "grey water" may be delivered from the appliance group to the water heater via the second inlet so as to replenish the water heater with thermal bearing fluids.

The appliance system may include a database storing a plurality of cycle of parameters. The cycle of parameters include the steps a respective appliance must take to accomplish selected task. The cycle of parameters may further include the energy load required to complete the selected task. In addition, sensors are provided to detect the thermal energy generated by each appliance. The sensors are in communication with a processor that is operable to process the thermal energy generated by the appliances along with projected thermal energy needs of a selected cycle of parameters in order to distribute or share thermal energy bearing fluids between appliances in the appliance group and thereby reduce energy consumption.

Another embodiment generally includes a method of delivering, recovering, storing, and redistributing thermal energy between separate appliances of an appliance group. The method typically includes the steps of providing an appliance group that includes at least two appliances. A first appliance is designed to perform a first consumer function related to the first appliance and a second appliance that is separate from the first appliance and is designed to perform a second consumer function related to the second appliance. The appliance group further includes a heat pump or other thermal energy generator. A thermal storage unit is also typically provided, and when provided, is operably connected to the heat pump (or other thermal energy generator), the first appliance, and the second appliance via one or more conduits to allow water or air (or other thermal energy bearing fluid) to be transferred to and from the heat pump and to and from the first home appliance, the second home appliance, or both. Thermal energy is delivered to a first amount of water or air (or other thermal energy bearing fluid) using the heat pump (or other thermal energy generator) and the heated water or air conveyed to at least one of the first home appliance and the second home appliance. Remaining thermal energy from the heated water or air is typically recovered using a thermal storage unit, when employed. When a thermal storage unit is employed, the recovered thermal energy is stored in the thermal storage unit and redistributed to a second amount of water or air (or other thermal energy bearing fluid) and conveyed to the heat pump (or other thermal energy generator), if further thermal energy is needed, or if not, directly to at least one of the first or second appliances without additional thermal energy being supplied by the heat pump (or other thermal energy generator).

Yet another embodiment includes a method of reducing energy consumption of an appliance system having a plurality of appliances by recycling thermal energy. The method includes the step of providing a water heater operable to supply thermal energy bearing fluids to the appliances. The water heater includes a first inlet, a second inlet and an outlet. The first inlet is coupled to a utility water source, so as to be in fluid communication with a utility water source. The heated water is then delivered to various appliances upon user demand through the outlet.

The second inlet is also in fluid communication with the appliances. The appliances draw hot water from the water heater through the outlet. It should be appreciated that the water heater replenishes the drawn hot water with relatively cold water from the utility water source. Thus, the water heater must consume additional energy to heat the cold water to the selected water temperature.

The method proceeds to the step of delivering thermal energy bearing fluids (hot water) from at least one of the appliances to the water heater via the second inlet so as to help replenish water in the water heater. The water heater may recover any deficiency in water capacity by drawing water from the utility water source.

### BRIEF DESCRIPTION OF THE DRAWINGS

Figure 1 is a perspective view of an appliance system according to an embodiment of the present invention;
Figure 2 is an interior perspective view of an appliance system according to an embodiment of the present invention;
Figure 3 is a schematic flow diagram of utility flow through an embodiment of an appliance system according to an embodiment of the present invention;
Figure 4 is a schematic of a dryer and thermal energy generator closed loop system according to an embodiment of the present invention;
Figure 5 is a process diagram of an appliance system according to a first preferred embodiment of the present invention;
Figure 6 is a perspective view of an appliance system according to a first preferred embodiment of the present invention;
Figure 7 is a chart showing steps for reducing energy consumption of a water heater; and
Figure 8 is a chart showing steps reducing energy consumption of an appliance system.

### DETAILED DESCRIPTION OF THE PREFERRED EMBODIMENT

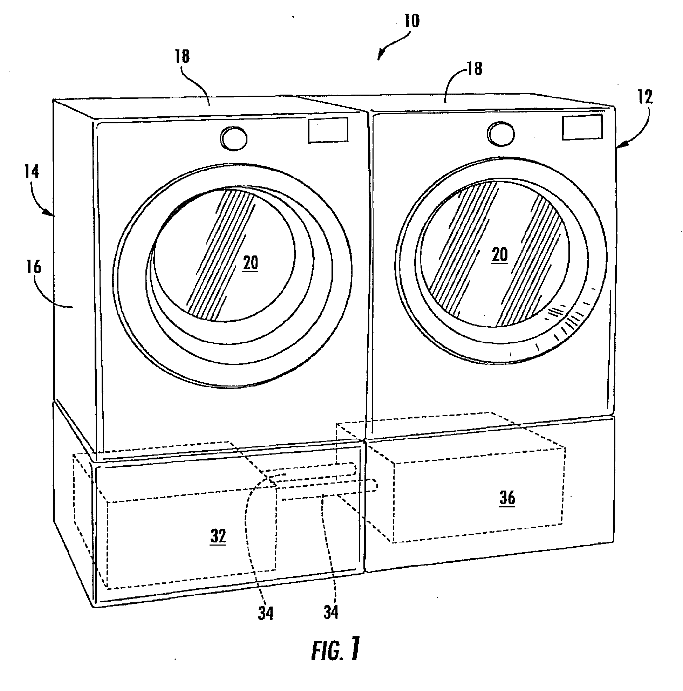

For purposes of description herein, the terms "upper," "lower," "right," "left," "rear," "front," "vertical," "horizontal" and derivatives thereof shall relate to the appliance as orientated in Fig. 1. However, it is to be understood that the invention may assume various alternative orientations, except where expressly specified to the contrary. It is also to be understood that the specific devices and processes illustrated in the attached drawings, and described in the following specification are simply exemplary embodiments of the inventive concepts defined in the appended claims. Hence, specific dimensions and other physical characteristics relating to the embodiments disclosed herein are not to be considered as limiting, unless the claims expressly state otherwise.

According to an embodiment of the present invention, an appliance system, typically an appliance system 10 (see Figures 1-3) generally includes at least two appliances, a first appliance 12 designed to perform a first consumer function related to the first appliance and a second appliance 14, that is separate from the first appliance, where the second appliance is designed to perform a second consumer function related to the second appliance. The appliance group may include more than two separate appliances for example a third, a fourth and thereafter appliances. The appliances of the appliance group or subset of the appliances of the group are typically related appliances in function and proximity within a building, especially a residential housing. For example, the first appliance and second appliance may be a water heater and furnace or, for example, a washer and dryer pair. More broadly speaking, the appliance group may be a first laundry appliance and a second laundry appliance where the first laundry appliance is typically a washing machine and the second laundry appliance is typically a dryer. Other appliances that might be appliances of the appliance systems of the present invention include, but are not limited to, dishwashers, ovens (typically convection ovens), refrigerators, freezers, refrigerator and freezer appliances, and small appliances requiring thermal energy, for example, countertop appliances including coffee makers.

The consumer function of the appliances, when the appliances are laundry appliances, can be selected from the following group: washing, drying, refreshing, sanitizing, stain removal, ironing, hand steaming, sink, and combinations thereof. When the first appliance is a furnace, for example, the consumer function is typically heating of a building, typically a residence. Similarly, the consumer function for a water heater, when a water heater is a part of the appliance group, is heating water.

According to one embodiment of the present invention, the appliance group includes two laundry appliances. The laundry appliances are for washing and drying fabric items, such as clothes and linens. Examples of the laundry appliances include, but are not limited to, a washing machine, including top-loading, front-loading, vertical axis, and horizontal axis washing machines, a dryer, such as a tumble dryer, including top-loading dryers and front-loading dryers, a tumbling refreshing machine, an extractor, a non-aqueous washing apparatus, and cabinet based versions for non-tumble drying and refreshing. In addition, the two appliances can be two appliances of the same type, such as two washing machines, two hot water heaters, or two drying machines.

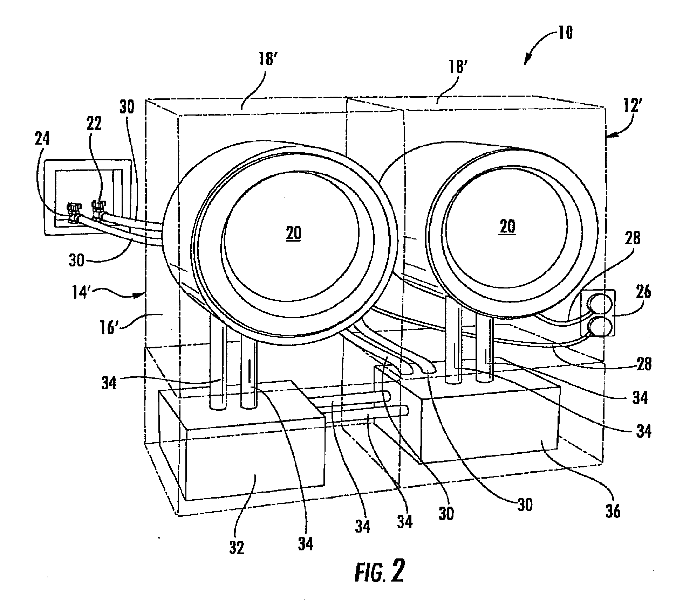

When two or more laundry appliances are utilized according to an embodiment of the present invention, the laundry appliances each include a housing that typically includes left side walls 16 and right side walls, front and rear walls, and top walls 18 and bottom walls that together define the housing. A front loading washer and dryer pair are generally shown in Figures 1 and 2. The appliances typically employ clear doors 20 mounted to the front surface of the housing and typically hingedly connected thereto. The clear doors allow the user to view the fabric articles within the chamber before, during, and after processing by the appliance. In this manner, the operator can open the door and access fabric and clothing items contained within a chamber for receiving such articles for processing.

As shown generally in Figure 2, the washer appliance 12 is typically connected to a hot water source 22 and cold water source from the main plumbing of a building, typically a residential dwelling or commercial establishment, requiring the use of a washer. Typically, the washing machine 12 is operably connected to an electrical outlet 26 for receiving electrical power. The dryer appliance 14 is also typically connected to an electrical outlet 26, which is the same or different outlet as the washer is connected to. Optionally, the dryer may also be connected to a water source similar to the washer if direct water resources are necessary to achieve the consumer function or functions of the dryer. For example, the dryer may be directly connected to a household plumbing source (hot and cold water, or hot or cold water) or may be connected via appropriate conduit to the same household water source as the washer. Water conduits 30, such as flexible hoses, are typically employed for this purpose.

According to one embodiment of the present invention, the appliance group utilizes a thermal energy generator 32 that generates heat, to heat at least one thermal energy bearing fluid. The thermal energy generator is typically operably connected to at least two of the appliances in the appliance group, more typically all of the appliances in the appliance group via appropriate conduits 34 to allow for the delivery of thermal energy to at least two of the appliances of the appliance group at the same or different times via one or more of the thermal energy bearing fluids. Preferably, the thermal energy generator is operably connected to each of the appliances of an appliance group. The thermal energy provided to the appliances by the thermal generator via the thermal energy bearing fluids is utilized to perform the consumer functions related to each individual appliance. The thermal energy generator produces heating effects for both the washer and dryer, in an example where the appliance group is a washer and dryer. The thermal energy generator that is typically a heat pump, could be any heating source for use in connection with an appliance, including an electrical resistance heater or combination of thermal energy generators.

According to an embodiment of the present invention, a thermal storage unit 36 may be operably connected to any embodiment of or combination of the present invention. In some instances, a thermal storage unit may be operably connected to the appliance group or subset of appliances within the group as well as the thermal energy generator. In particular, the thermal storage unit may be operably connected to the thermal energy generator and the first appliance and the second appliance via one or more conduits to allow one or more energy bearing fluids to be transferred to and from the thermal energy generator and to and from the first appliance and second appliance. In this manner, the thermal storage unit stores thermal energy for later use by one or more utilities and can be delivered to the first appliance and the second appliance when needed.

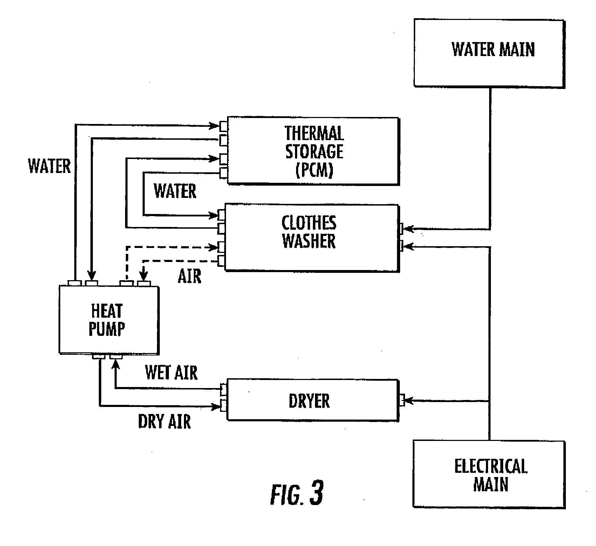

The thermal energy bearing fluid may be any gas or liquid. Additionally, as discussed above, the thermal energy generator may be a high efficiency heat pump or another heating source such as an electrical resistor heating subsystem. When employed, the heat pump is typically capable of receiving air, typically wet exhausted air from the dryer as well as air or water directly from a clothes washer and/or a thermal storage unit as generally shown in Figure 3. As such, the heat pump system provides a combined heating solution for both the washing machine and the drying machine of a washer and dryer appliance group. In addition, the heat pump module improves washer and dryer efficiency by better sharing the thermal energy/heat between the two appliances.

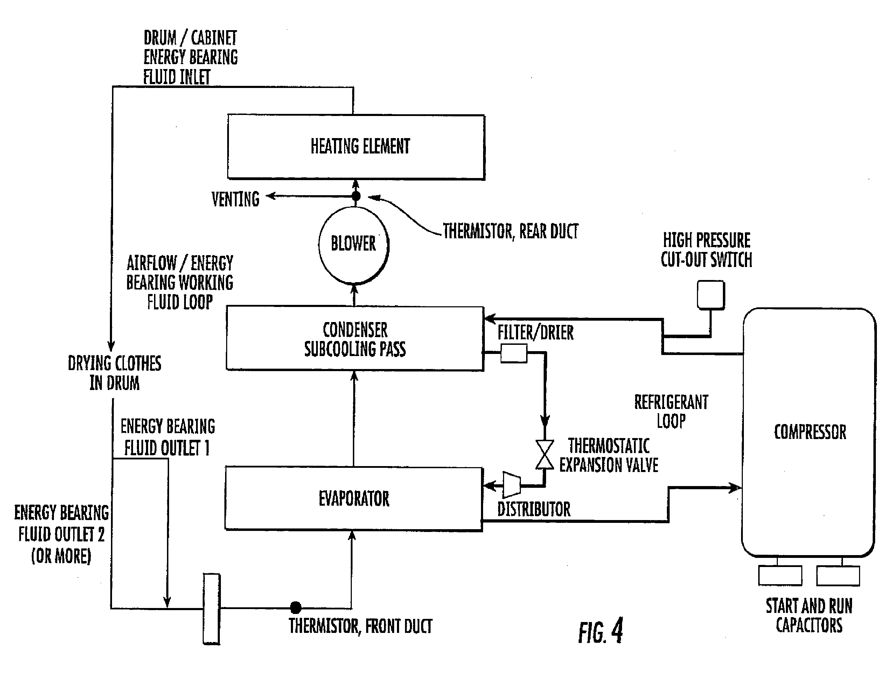

Moist air with a higher temperature than ambient with sensible and latent heat content coming from the outlet of the dryer is, according to one embodiment of the present invention, not vented to the outside of a building, typically a residential dwelling, but re-circulated through heat exchangers, an evaporator, and a condenser of the heat pump (See Fig. 4). The evaporator of the heat pump system recovers sensible and latent heat from the moist air by condensing the water vapor, thereby capturing what was previously waste heat exhausted out of conventional dryers. The recovered energy, according to one embodiment, is then used to heat drying air in the condenser subsystem of the heat pump. Figure 4 shows a schematic of a high efficiency heat pump electric dryer linked system. The energy efficient closed loop flow operation of the dryer is enabled by re-circulating air. The re-circulated air is first dehumidified and then heated. The heat exchanger(s), typically two heat exchangers, in the heat pump system work in serial in the air flow path. The evaporator absorbs the heat and condenses the moisture out of the re-circulated air and the condenser supplies heat to the dry air. The process goes from an initial wrap-up phase to a constant rate phase, then to a falling rate phase varying with time. With the exception of a small heat loss during the constant rate, most if not all the sensible heat lost by the air is converted into latent heat of the water vapor in the drying air.

The electrical resistance heater may at maximum produce the amount of heat equivalent to the electrical power being provided thereto. Because the heat pump system has a co-efficient of performance much higher than one, for example three, the electrical energy input to the compressor results in three units of heat input to the washing water or the drying air. The heat pump system, therefore potentially uses only one-third the energy input of a comparable electrical resistance heater used for heating the water and heating the dryer air. The closed loop air circulation in the dryer prevents the dryer from taking conditioned air from the building (typically a residential home), as opposed to conditioned air being exhausted out in the conventional air-vented dryer. As such, the new system reduces the cooling load on the air conditioning system of the overall building or the heating load on the heating system in the winter.

The coupled appliance group and heat pump, typically the clothes dryer, clothes washer, and heat pump provides other benefits such as low temperature drying of clothes which promotes good fabric care (minimum fabric shrinkage, less wrinkle formation, and reduction of fiber aging).

If a user runs two consecutive loads at the same time in a washer and dryer pair, meaning one load in a washer and another one in the dryer, the condenser, according to an embodiment of the present invention, accurately distributes heating loads between the washer and the dryer based upon the washer and dryer's different heating requirements. This is similarly true of the appliances other than a clothes washer and a clothes dryer.

The thermal storage unit 36 typically captures thermal energy using a phase change materials' (PCM) latent heat storage and can be achieved through solid-solid, solid-liquid, liquid-gas, and solid-gas phase change. However, according to the present invention, the phase change material typically used is a solid-liquid phase change material. The solid-liquid phase change material typically behaves like sensible heat storage materials initially, i.e. the temperature rises as the PCM absorbs thermal energy (heat). However, unlike conventional heat storage materials, when phase change materials reach the temperature at which they change phase, they absorb large amounts of heat at an almost constant temperature. As such, the phase change material absorbs heat without a significant raise in temperature until all the material is transformed to the liquid phase (in a solid-liquid phase change material). As the ambient temperature around the liquid phase change material falls, the phase change material solidifies, releasing its stored latent heat. The phase change materials of the present invention may include organic phase change materials, inorganic phase change materials and/or eutectic materials (organic-organic, organic-inorganic, inorganic-inorganic compounds). For example, phase change materials may include fatty acids and salt hydrates and when used in the present invention are typically non-toxic, noncorrosive, and not hydroscopic.

When a washer and dryer pair are two of the appliances of an appliance group according to the present invention, the interlinkage of the washer and dryer provides another unique benefit. The fins of the heat exchanger(s) can capture the lint thereby fouling the heat exchanger surface. When the washer and dryer are coupled, the rinse water coming from the washer side can serve as a lint cleaning method for the heat exchanger(s). The condensate can wash out some lint from the condenser surface and the at least substantially clean rinse water from the washer can flush away the lint left on the heat exchanger(s) surface(s).

The thermal energy generator, typically the heat pump, may be positioned within the pedestal or housing within a pedestal outside the appliance or within the housing of one of the appliances of the appliance group. Similarly, the thermal storage unit may be positioned external to the appliance group, within a pedestal below one or more of the appliances from the appliance group, or within the main housing of one of the appliances of the appliance group. As shown in Figure 2, the heat pump 32 is shown in the pedestal below the dryer and the thermal storage unit 36 is shown below the washer in Figure 2.

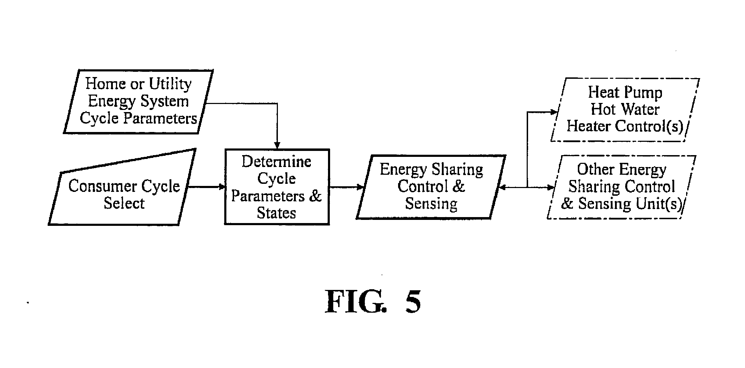

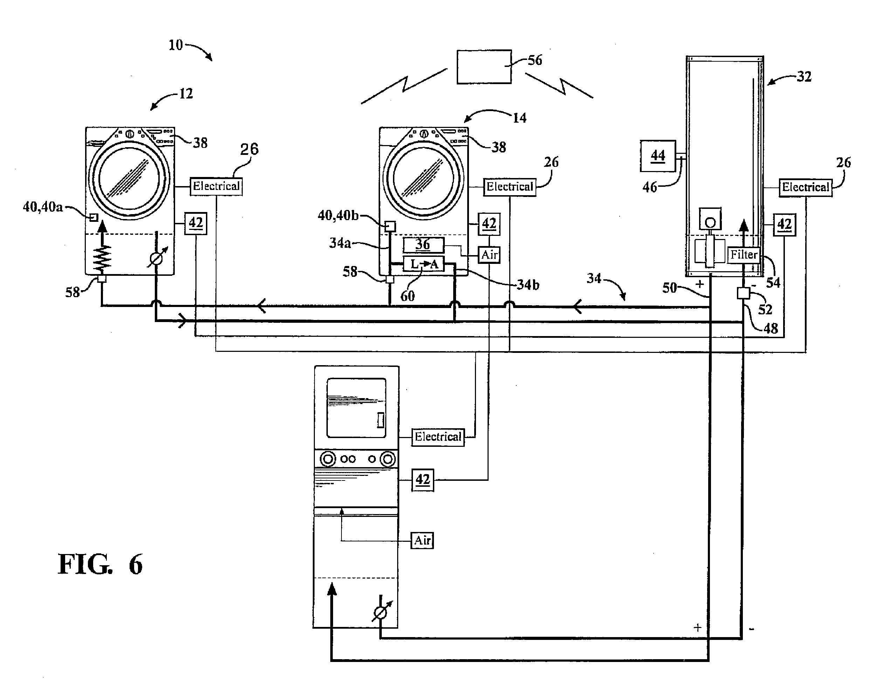

With reference now to Figures 5 and 6 an appliance system 10 operable to recover and redistribute thermal energy between separate appliances 12, 14 of an appliance group is provided. The appliance system includes a plurality of cycle parameters for respective appliances in the appliance group. The cycle of parameters is indicative of the operating conditions for the respective washer and dryer appliances. The cycle of parameters includes the steps the appliance will take to complete a selected task. For instance, the washer may have a cycle parameter for a light wash, medium wash, or heavy wash indicating a washing condition for various loads of laundry. An illustrative example of tasks for a light wash is to fill the washer with a predetermined amount of water at a selected temperature, actuate the washer chamber in a predefined sequence of rotations using a predetermined amount of force over a predetermined time period, drain the washer, spin the chamber, and the like.

The appliances 12, 14 include an input 38 operable to actuate one of the cycles. The user actuates the input 38 so as to select a desired cycle of parameters, actuating the respective appliance in the selected cycle parameter. The appliance system is configured to sense the thermal energy of each of the operating appliances, and determine if thermal energy from one appliance may be transferred or shared with another appliance so as to reduce energy loads for operating the appliances. In instances where thermal energy bearing fluids may be transferred from one appliance to another so as to reduce energy consumption, a pump is actuated so as to deliver thermal energy from one appliance to another.

With reference now to Figure 6 an illustrative view of an appliance system 10 is shown wherein the thermal energy generator 32 is a water heater thermally coupled to an appliance group via conduits 34. The appliance group includes a washer and dryer appliances 12, 14. The appliance system 10 includes a sensor 40 in communication with the appliance group. The sensor 40 is operable to detect the amount of thermal energy within the washer 12 and dryer 14. Alternatively, the appliance system 10 may include a first sensor 40a and a second sensor 40b. The first sensor 40a is operable to detect the amount of thermal energy generated by the washer appliance 12 and the second sensor 40b is operable to detect the amount of thermal energy generated by the dryer appliance 14.

The appliance system 10 includes one or more processors 42 in communication with the sensors 40a and/or 40b. The water heater 32 utilizes water from a utility source 44 to store water for use in the appliances 12, 14. Currently, water heaters replenish water used by each appliance with relatively cold water from the utility source. This water is then heated so as to maintain a source of water at a selected temperature. In the present invention, thermal energy bearing water from the appliances is recycled back into the water heater so as to minimize the amount of relatively cold water used to replenish the water heater, thereby saving energy.

The water heater 32 is operably connected to the first appliance and the second appliance via the conduits 34 and includes a first inlet 46, a second inlet 48, and an outlet 50. The first inlet 46 is in fluid communication with the utility water supply 44. The second inlet 48 and the outlet 50 are in fluid communication with the conduits 34 so as to supply heated water 32 to the appliance group, and receive grey water bearing thermal energy from the appliances 12, 14 in the appliance group.

The appliance system 10 and/or the water heater 32 may further include a pump 52 operable to deliver thermal energy bearing fluids from the appliance group to the water heater. Preferably, the pump is disposed downstream the water heater 32. The appliance system 10 may further include a filter 54 operable to filter thermal energy bearing fluids, such as grey water, delivered from the appliance group to the water heater 32.

The water heater 32 is in communication with a processor 42. In addition, the processor 42 processes the thermal energy detected in the first and second appliance 12, 14 so as to direct the water heater 32 to deliver thermal energy to the first and second appliances 12, 14 simultaneously or at different times via one or more of the thermal energy bearing fluids and thereby reduce the power consumption for operating the appliance group. Further, thermal bearing fluids may be recycled back into the water heater 32 through one of the conduits 34 in fluid communication with the second inlet 48 so as to reduce the need for introduction of cold water from the utility water supply. Thus, less energy is required to maintain the water heater 32 at a selected temperature.

The appliance system 10 may further include a database 56 operable to store a plurality of cycle parameters corresponding to washer 12 and dryer 14. In some instances, the database 56 is in wireless communication with the appliance 10, however this is not required. The input 38 is operable to select at least one of the cycle parameters. It should be appreciated by those skilled in the art, that a combination of cycle parameters may be selected. For instance a washer 12 may be operable to run a light wash utilizing cold water. Likewise, the dryer 14 may have cycle parameters such as air dry, or heat dry, wherein in an air dry cycle parameter ambient air is used to dry the clothes and in a heat dry cycle parameter heated air is used to dry clothes . It is appreciated that each of the plurality of cycle parameters can further include the thermal needs of the selected cycle of parameters and the input 38 can be in communication with each of the at least two appliances 12, 14, so as to actuate the respective one of the at least two appliances 12, 14 in the selected cycle parameters.

The processor 42 is operable to process the selected cycle parameters so as to actuate the water heater 32 to deliver thermal energy to each of the at least two appliances 12, 14 in accordance with the thermal energy needs of the selected cycle parameters. The processor 42 may be in electrical communication with a controller 58 operable to control the input and output of thermal bearing fluids from respective washer and dryer appliances 12, 14. The controller 58 may include mechanical devices such as valves and pumps coupled to conduits interconnecting the water heater to the respective washer and dryer appliances 12, 14.

The processor 42 may calculate the thermal energy generated by the appliances 12, 14 along with the thermal energy needs of the selected cycle parameter to direct energy between the water heater 32 and the appliances 12, 14. In addition, the processor 42 is operable to process the selected cycle parameters so as to actuate the water heater 32 to deliver thermal energy to each of the at least two appliances 12, 14. In one instance, thermal energy from one of the two appliances 12, 14 is delivered to the other of the two appliances 12, 14 when the thermal energy generated from one of the two appliances 12, 14 exceeds the thermal energy needs of the selected cycle parameter of the other of the two appliances 12, 14. This may be beneficial when the thermal energy detected in the other of the two appliances 12, 14 does not meet the thermal energy needs of the selected cycle parameter.

For example, in cases where the dryer 14 is configured to inject steam into the drying chamber, thermal energy bearing fluids from the washer 12 may be delivered to the dryer 14 during the washer's operation. Such dryers 14 include a liquid-to-air converter 60 operable to heat water to steam so as to inject steam into the drying chamber. In such a case, water drained from the washer 12, also referenced as "grey water" may be heated, and the heated grey water may be introduced into a liquid-to-air converter 60 for conversion into steam. In addition to or alternatively, the thermal energy bearing grey water may be passed by a thermal storage unit 36 to transfer energy thereto, the thermal storage unit 36 being coupled to a conduit 34 supplying water to the liquid-to-air converter 60.

Specifically, a first air conduit 34a can deliver air from the environment to an air heater for introduction into the dryer 14 and the liquid-to-air converter 60 is operable to selectively inject steam into the dryer 14 during drying operations. In addition, the liquid-to-air converter 60 is in fluid communication with the first inlet 46 and may or may not be adjacent the first air conduit 34a so as to transfer thermal energy to the first air conduit 34a. The thermal storage unit 36 can also be in fluid communication with the first air conduit 34a and thereby transfer thermal energy thereto.

The system may further include a second air conduit 34b that interconnects the washer 12 to the first air conduit 34a. The second air conduit 34b is operable to receive thermal energy bearing fluids from the washer 14 so as to provide heated air to the first air conduit 34a and/or to the liquid-to-air converter 60. In this manner, water and/or air can be preheated and thereby reduce the power required to convert water to steam and/or preheat air supplied to the dryer 14.

The appliance system 10 is configured to reduce the operating power load of the appliances by utilizing thermal energy which would otherwise be drained. For example, in some instances the processor 42 may direct thermal bearing fluids from the washer 12 to meet the thermal energy needs of the dryer 14 when: (1) the thermal energy generated by the washer 12 exceeds the thermal energy needs of the selected cycle parameter of the dryer 14; and (2) the thermal energy detected in the dryer 14 does not meet the thermal energy needs of the selected cycle parameter of the dryer 14. In such an operation, thermal bearing "grey water" may be used to warm up air being introduced into the drying chamber when the dryer is operating in an "air dry" mode.

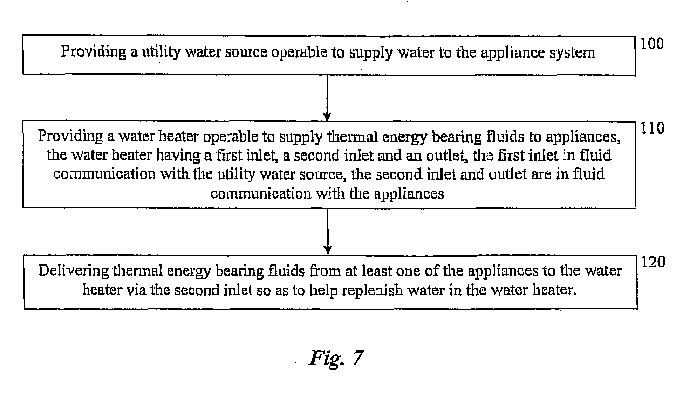

With reference now to Figure 7, a method of reducing energy consumption of a water heater is provided. The method begins at step 100 wherein a utility water source is provided. The utility water source is operable to supply water to the appliance system.

At step 110 a water heater is provided. The water heater is operable to supply thermal energy bearing fluids to the appliances. The water heater includes a first inlet, a second inlet and an outlet. The first inlet is coupled to a utility water source, so as to be in fluid communication with a utility water source. As is known, the water heater is operable to heat water to a selected temperature and may include an input operable to adjust the temperature of water in the water heater to a selected degree. The heated water is then delivered to various appliances upon user demand through the outlet.

The second inlet is also in fluid communication with the appliances. It should be appreciated that any appliance currently known and used in the art may be adaptable for use herein, illustratively including a clothes washer, clothes dryer, dishwasher, and the like. The appliances include an input operable to draw hot water from the water heater. It should be appreciated that the water heater replenishes the drawn hot water with relatively cold water from the utility water source. Thus, the water heater must consume additional energy to heat the cold water to the selected water temperature.

The method proceeds to the step 120 wherein thermal energy bearing fluids (hot water) are delivered from at least one of the appliances to the water heater via the second inlet so as to help replenish water in the water heater. The water heater may recover any deficiency in water capacity by drawing water from the utility water source. Accordingly, less cold water is drawn from the utility water source relative to current methods of replenishing water in a water heater. Thus, less energy is required to heat the water heater to a selected temperature.

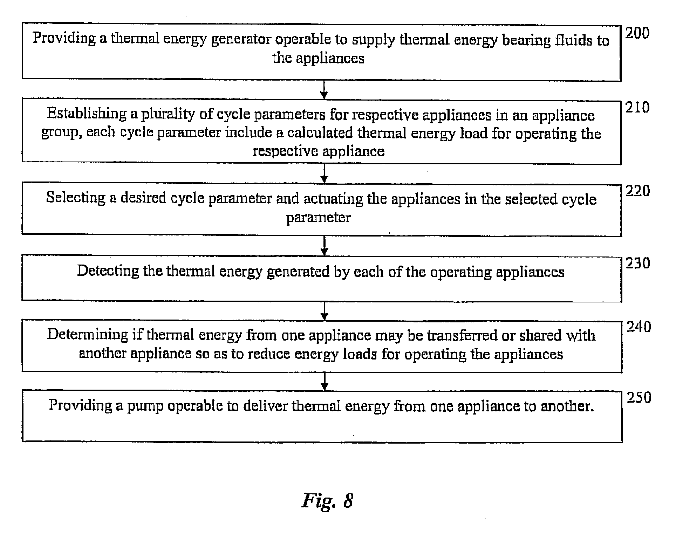

With reference now to Figure 8, a method of reducing energy consumption of an appliance system is provided. The appliance system includes a group of appliances having at least two appliances. At step 200 a thermal energy generator, such as a water heater is provided. The thermal energy water heater is operable to supply thermal energy bearing fluids to the appliances in the appliance system.

At step 210 a plurality of cycle parameters for respective appliances in the appliance group are established. Each of the cycle parameters include a calculated thermal energy load for operating the respective appliance. For example and for illustrative purposes only, a cycle parameter for operating the washer with a heavy load using hot water may have a calculated thermal load of 52755 Joule (50 BTUs), whereas a cycle parameter for operating the washer with a light load using cold water may have a calculated thermal load of 5275 Joule (5 BTUs). At step 220, the user selects a desired cycle parameter and the appliances are actuated according to the selected cycle parameter.

At step 230, the method proceeds to sensing the thermal energy of each of the operating appliances, for example, a sensor detects the thermal energy generated by each of the appliances. At step 240, the method proceeds to determining if thermal energy from one appliance may be transferred or shared with another appliance so as to reduce energy loads for operating the appliances. A controller may be provided, the controller operable to deliver thermal bearing fluids from an appliance having excess thermal energy bearing fluids to heat an appliance in need to thermal energy bearing fluids so as to reduce energy consumption of the appliance system.

At step 250, a pump operatively connected to the second inlet is provided. The pump is operable to deliver thermal bearing fluids from the appliances to the water heater. The method may further include the step of providing a filter, the filter operable to filter the thermal bearing fluids. The filter may be mounted to the second inlet and upstream the water heater. Thus, thermal bearing fluids are filtered prior to entering the water heater.

## Claims

1. An appliance system (10) comprising:
an appliance group that includes at least two appliances (12, 14) including;
a first appliance (12) designed to perform a first consumer function related to the first appliance (12), and
a second appliance (14) separate from the first appliance (12) and designed to perform a second consumer function related to the second appliance (14);
a thermal energy generator (32) that heats at least one thermal energy bearing fluid, and is operatively connected to the first appliance (12) and the second appliance (14);
**characterized in that** it further comprises:
a sensor (40, 40a. 40b) in communication with the appliance group (12, 14), the sensor (40, 40a, 40b) being operable to detect the amount of thermal energy within each appliance (12, 14) in the appliance group;
a processor (42) in communication with the sensor (40, 40a, 40b); and
wherein the processor (42) processes the thermal energy detected in the first appliance (12) and second appliance (14), and directs the thermal energy generator (32) to deliver thermal energy to the first appliance (12) and second appliance (14) simultaneously or at different times via one or more of the thermal energy bearing fluids, so as to reduce the power consumption for operating the appliance group.

2. The appliance system as set forth in claim 1, further comprising a plurality of cycle parameters and an input for each of the at least two appliances (12, 14) in the appliance group, and a database (56), each of the plurality of cycle parameters having the thermal needs of the respective one of the at least two appliances (12, 14) and the input operable to select one of the plurality of cycle parameters so as to actuate the respective one of the at least two appliances (12, 14) in the selected cycle parameters.

3. The appliance system as set forth in claim 2, wherein the processor (42) is operable to process the selected cycle parameters so as to actuate the thermal energy generator (32) to deliver thermal energy to each of the at least two appliances (12, 14), wherein the processor (42) is also operable to deliver thermal energy from the first appliance (12) to the second appliance (14) when the thermal energy generated from the first appliance (12) exceeds the thermal energy needs of the selected cycle parameter for the first appliance (12) and the thermal energy detected in the second appliance (14) does not meet the thermal energy needs of the selected cycle parameter for the second appliance (14).

4. The appliance system as set forth in claini 1, wherein the sensor (40) consists of a first sensor (40a) and a second sensor (40b), the first sensor (40a) being in communication with and operable to detect the amount of thermal energy generated by the first appliance (12), the second sensor (40b) being in communication with and operable to detect the amount of thermal energy generated by the second appliance (14).

5. The appliance system as set forth in claim 1, wherein the thermal energy generator is a water heater (32) including a first inlet (46), a second inlet (48), and an outlet (50), the first inlet (46) being in fluid communication with a utility water supply (44), the second inlet (48) and outlet (50) being in fluid communication with the appliance group.

6. The appliance system as set forth in claim 5, further comprising a pump (52) operable to deliver a thermal energy bearing fluid from the appliance group to the water heater (32).

7. The appliance system as set forth in claim 6, wherein the pump (52) is disposed downstream the water heater (32).

8. The appliance system as set forth in claim 5, further comprising a filter (54) operable to filter a thermal energy bearing fluid delivered from the appliance group to the water heater (32).

9. The appliance system as set forth in claim 5, wherein the first appliance (12) is a washer, and the second appliance (14) is a dryer.

10. The appliance system as set forth in claim 9, wherein the dryer (14) includes a liquid to air converter (60), an air heater, and a first air conduit delivering air from the environment to the air heater for introduction into the dryer, the liquid to air converter (60) being operable to selectively inject steam into the dryer during drying operations, the liquid to air converter being in fluid communication with the first inlet (46) and adjacent the first air conduit (34) so as to transfer thermal energy to the first air conduit (34).

11. The appliance system as set forth in claim 10, further comprising a second air conduit, the second air conduit interconnecting the washer (12) to the first air conduit (34), the second air conduit operable to receive thermal energy from the washer (12) so as to provided heated air to the first air conduit.

12. A method of reducing energy consumption of an appliance system (10) having a plurality of appliances (12, 14) by redistributing thermal energy between the appliances, the method comprising the steps of:
providing a thermal energy generator (32) operable to supply a thermal energy bearing fluid to the appliances (12, 14);
establishing a plurality of cycle parameters for the respective appliances (12, 14) in an appliance group;
selecting the desired cycle parameters and actuating the appliances (12, 14) according to the selected cycle parameters; **characterized in that** it further comprises
sensing the thermal energy of each of the operating appliances (12, 14);
determining if thermal energy from one appliance (12, 14) may be transferred or shared with another appliance (12, 14) so as to reduce energy loads for operating the appliances (12, 14); and
delivering thermal energy from one appliance (12, 14) to another so as to reduce energy loads for operating the appliances (12, 14).

13. The method as set forth in claim 12, further including the step of providing a sensor (40, 40a, 40b) operable to detect the thermal energy generated by each of the appliances (12, 14) and further including the step of providing a pump (52) operable to deliver thermal energy from one appliance to another.

14. The method as set forth in claim 12, wherein the cycle parameters include a calculated thermal energy load for operating the respective appliance (12, 14) in the selected cycle parameter.

15. The method as set forth in claim 12, wherein the thermal energy generator is a water heater (32).

## Patentansprüche

1. Gerätesystem (10), umfassend:
eine Gerätegruppe, die mindestens zwei Geräte (12, 14) aufweist, die Folgendes aufweisen:
ein erstes Gerät (12), das zum Ausführen einer ersten Verbraucherfunktion konzipiert ist, die mit dem ersten Gerät (12) in Zusammenhang steht; und
ein zweites Gerät (14), das von dem ersten Gerät (12) getrennt ist und zum Ausführen einer zweiten Verbraucherfunktion konzipiert ist, die mit dem zweiten Gerät (14) in Zusammenhang steht;
einen Wärmeenergiegenerator (32), der mindestens ein wärmeenergietragendes Fluid erwärmt und betriebswirksam mit dem ersten Gerät (12) und dem zweiten Gerät (14) verbunden ist;
**dadurch gekennzeichnet, dass** es ferner Folgendes umfasst:
einen Sensor (40, 40a, 40b), der mit der Gerätegruppe (12, 14) in Verbindung steht, wobei der Sensor (40, 40a, 40b) zum Erkennen der Wärmeenergiemenge in jedem Gerät (12, 14) in der Gerätegruppe betrieben werden kann;
einen Prozessor (42), der mit dem Sensor (40, 40a, 40b) in Verbindung steht; und
wobei der Prozessor (42) die Wärmeenergie, die in dem ersten Gerät (12) und dem zweiten Gerät (14) erkannt wird, verarbeitet und den Wärmeenergiegenerator (32) anweist, Wärmeenergie an das erste Gerät (12) und das zweite Gerät (14) gleichzeitig oder zu unterschiedlichen Zeitpunkten über ein oder mehrere wärmeenergietragende Fluida abzugeben, um so den Stromverbrauch zum Betreiben der Gerätegruppe zu verringern.

2. Gerätesystem nach Anspruch 1, ferner umfassend mehrere Zyklusparameter und eine Eingabe für jedes der mindestens zwei Geräte (12, 14) in der Gerätegruppe, und eine Datenbank (56), wobei der Wärmebedarf des entsprechenden der mindestens zwei Geräte (12, 14) und die Eingabe der mehreren Zyklusparameter betriebsbereit sind, einen der mehreren Zyklusparameter derart auszuwählen, dass das entsprechende der mindestens zwei Geräte (12, 14) in den ausgewählten Zyklusparametern betätigt wird.

3. Gerätesystem nach Anspruch 2, wobei der Prozessor (42) betriebsbereit ist, die ausgewählten Zyklusparameter derart zu verarbeiten, dass der Wärmeenergiegenerator (32) zum Abgeben von Wärmeenergie an jedes der mindestens zwei Geräte (12, 14) betätigt wird, wobei der Prozessor (42) auch betriebsbereit ist, Wärmeenergie von dem ersten Gerät (12) an das zweite Gerät (14) abzugeben, wenn die Wärmeenergie, die von dem ersten Gerät (12) erzeugt wird, den Wärmebedarf des ausgewählten Zyklusparameters für das erste Gerät (12) überschreitet und die Wärmeenergie, die in dem zweiten Gerät (14) erkannt wird, den Wärmebedarf des ausgewählten Zyklusparameters für das zweite Gerät (14) nicht deckt.

4. Gerätesystem nach Anspruch 1, wobei der Sensor (40) aus einem ersten Sensor (40a) und einem zweiten Sensor (40b) besteht, wobei der erste Sensor (40a) verbunden und betriebsbereit ist, die Wärmeenergiemenge zu erkennen, die von dem ersten Gerät (12) erzeugt wird, und der zweite Sensor (40b) verbunden und betriebsbereit ist, die Wärmemenge zu erkennen, die von dem zweiten Gerät (14) erzeugt wird.

5. Gerätesystem nach Anspruch 1, wobei der Wärmeenergiegenerator ein Wasserheizgerät (32) ist, das einen ersten Einlass (46), einen zweiten Einlass (48) und einen Auslass (50) aufweist, wobei der erste Einlass (46) mit einer Betriebswasserzufuhr (44) in Fluidverbindung steht, wobei der zweite Einlass (48) und der Auslass (50) mit der Gerätegruppe in Fluidverbindung stehen.

6. Gerätesystem nach Anspruch 5, ferner umfassend eine Pumpe (52), die zum Abgeben eines wärmeenergietragenden Fluids aus der Gerätegruppe an das Wasserheizgerät (32) betriebsbereit ist.

7. Gerätesystem nach Anspruch 6, wobei die Pumpe (52) stromabwärts des Wasserheizgeräts (32) angeordnet ist.

8. Gerätesystem nach Anspruch 5, ferner umfassend einen Filter (54), der zum Filtern eines wärmeenergietragenden Fluids, das von der Gerätegruppe an das Wasserheizgerät (32) abgegeben wird, betriebsbereit ist.

9. Gerätesystem nach Anspruch 5, wobei das erste Gerät (12) eine Waschmaschine ist und das zweite Gerät (14) ein Trockner ist.

10. Gerätesystem nach Anspruch 9, wobei der Trockner (14) einen Flüssigkeits-Luft-Wandler (60), ein Luftheizgerät und eine erste Luftleitung aufweist, die Luft aus der Umgebung zur Einleitung in den Trockner an das Luftheizgerät abgibt, wobei der Flüssigkeits-Luft-Wandler (60) zum selektiven Eindüsen von Dampf während Trocknungsvorgängen in den Trockner betriebsbereit ist, wobei der Flüssigkeits-Luft-Wandler mit dem ersten Einlass (46) und benachbart der ersten Luftleitung (34) in Fluidverbindung steht, um: Wärmeenergie an die erste Luftleitung (34) zu übertragen.

11. Gerätesystem nach Anspruch 10, ferner umfassend eine zweite Luftleitung, wobei die zweite Luftleitung die Waschmaschine (12) mit der ersten Luftleitung (34) verbindet, wobei die zweite Luftleitung zum Empfangen von Wärmeenergie aus der Waschmaschine (12) betriebsbereit ist, um der ersten Luftleitung erwärmte Luft bereitzustellen.

12. Verfahren zum Verringern des Energieverbrauchs eines Gerätesystems (10) mit mehreren Geräten (12, 14) durch Umverteilen der Wärmeenergie zwischen den Geräten, wobei das Verfahren die folgenden Schritte umfasst:
Bereitstellen eines Wärmeenergiegenerators (32), der zum Zuführen eines wärmeenergietragenden Fluids an die die Geräte (12, 14) betriebsbereit ist;
Festlegen mehrerer Zyklusparameter für die jeweiligen Geräte (12, 14) in einer Gerätegruppe;
Auswählen der gewünschten Zyklusparameter und Betätigen der Geräte (12, 14) gemäß den ausgewählten Zyklusparametern; **dadurch gekennzeichnet, dass** es ferner Folgendes umfasst:
Erfassen der Wärmeenergie jedes der Geräte (12, 14), die in Betrieb sind;
Ermitteln, ob Wärmeenergie von einem Gerät (12, 14) auf ein anderes Gerät (12, 14) übertragen oder mit diesem gemeinsam genutzt werden kann, um so den Energiebedarf zum Betreiben der Geräte (12, 14) zu verringern; und
Abgeben von Wärmeenergie von einem Gerät (12, 14) an ein anderes, um so den Energiebedarf zum Betreiben des Geräts (12, 14) zu verringern.

13. Verfahren nach Anspruch 12, das ferner den Schritt des Bereitstellens eines Sensors (40, 40a, 40b) aufweist, der zum Erkennen der Wärmeenergie betriebsbereit ist, die von jedem der Geräte (12, 14) erzeugt wird, und das ferner den Schritt des Bereitstellens einer Pumpe (52) aufweist, die zum Abgeben von Wärmeenergie von einem Gerät an das andere betriebsbereit ist.

14. Verfahren nach Anspruch 12, wobei die Zyklusparameter einen berechneten Wärmeenergiebedarf zum Betreiben der entsprechenden Vorrichtung (12, 14) in dem ausgewählten Zyklusparameter aufweist.

15. Verfahren nach Anspruch 12, wobei der Wärmeenergiegenerator ein Wasserheizgerät (32) ist.

## Revendications

1. Système d'appareils ménagers (10) comprenant :
un groupe d'appareils ménagers qui inclut au moins deux appareils ménagers (12, 14) incluant :
un premier appareil ménager (12) conçu pour effectuer une première fonction grand public liée au premier appareil ménager (12), et
un second appareil ménager (14) distinct du premier appareil ménager (12) et conçu pour effectuer une seconde fonction grand public liée au second appareil ménager (14) ;
un générateur d'énergie thermique (32) qui chauffe au moins un fluide porteur d'énergie thermique, et qui est relié de manière opérationnelle au premier appareil ménager (12) et au second appareil ménager (14) ;
**caractérisé en ce qu'**il comprend en outre :
un capteur (40, 40a, 40b) en communication avec le groupe d'appareils ménagers (12, 14), le capteur (40, 40a, 40b) pouvant être mis en oeuvre pour détecter la quantité d'énergie thermique à l'intérieur de chaque appareil ménager (12, 14) dans le groupe d'appareils ménagers ;
un processeur (42) en communication avec le capteur (40, 40a, 40b) ; et
dans lequel le processeur (42) traite l'énergie thermique détectée dans le premier appareil ménager (12) et le second appareil ménager (14), et commande le générateur d'énergie thermique (32) pour délivrer de l'énergie thermique au premier appareil ménager (12) et au second appareil ménager (14) simultanément ou à différents moments via un ou plusieurs des fluides porteurs d'énergie thermique, de façon à réduire la consommation électrique pour mettre en oeuvre le groupe d'appareils ménagers.

2. Système d'appareils ménagers selon la revendication 1, comprenant en outre une pluralité de paramètres de cycle et une entrée pour chacun des au moins deux appareils ménagers (12, 14) dans le groupe d'appareils ménagers, et une base de données (56), chaque paramètre de la pluralité de paramètres de cycle ayant les besoins thermiques de l'appareil respectif des au moins deux appareils ménagers (12, 14) et l'entrée pouvant être mise en oeuvre pour sélectionner un paramètre de la pluralité de paramètres de cycle de façon à faire fonctionner l'appareil respectif des au moins deux appareils ménagers (12, 14) dans les paramètres de cycle sélectionnés.

3. Système d'appareils ménagers selon la revendication 2, dans lequel le processeur (42) peut être mis en oeuvre pour traiter les paramètres de cycle sélectionnés afin de faire fonctionner le générateur d'énergie thermique (32) pour délivrer de l'énergie thermique à chacun des au moins deux appareils ménagers (12, 14), dans lequel le processeur (42) peut également être mis en oeuvre pour délivrer de l'énergie thermique en provenance du premier appareil ménager (12) au second appareil ménager (14) lorsque l'énergie thermique produite à partir du premier appareil ménager (12) dépasse les besoins en énergie thermique du paramètre de cycle sélectionné pour le premier appareil ménager (12) et que l'énergie thermique détectée dans le second appareil ménager (14) ne répond pas aux besoins en énergie thermique du paramètre de cycle sélectionné pour le second appareil ménager (14).

4. Système d'appareils ménagers selon la revendication 1, dans lequel le capteur (40) consiste en un premier capteur (40a) et en un second capteur (40b), le premier capteur (40a) étant en communication avec et pouvant être mis en oeuvre pour détecter la quantité d'énergie thermique produite par le premier appareil ménager (12), le second capteur (40b) étant en communication avec et pouvant être mis en oeuvre pour détecter la quantité d'énergie thermique produite par le second appareil ménager (14).

5. Système d'appareils ménagers selon la revendication 1, dans lequel le générateur d'énergie thermique est un chauffe-eau (32) incluant une première entrée (46), une seconde entrée (48) et une sortie (50), la première entrée (46) étant en communication à fluide avec une alimentation en eau courante (44), la seconde entrée (48) et la sortie (50) étant en communication à fluide avec le groupe d'appareils ménagers.

6. Système d'appareils ménagers selon la revendication 5, comprenant en outre une pompe (52) pouvant être mis en oeuvre pour délivrer un fluide porteur d'énergie thermique en provenance du groupe d'appareils ménagers au chauffe-eau (32).

7. Système d'appareils ménagers selon la revendication 6, dans lequel la pompe (52) est disposée en aval du chauffe-eau (32).

8. Système d'appareils ménagers selon la revendication 5, comprenant en outre un filtre (54) pouvant être mis en oeuvre pour filtrer un fluide porteur d'énergie thermique délivré en provenance du groupe d'appareils ménagers au chauffe-eau (32).

9. Système d'appareils ménagers selon la revendication 5, dans lequel le premier appareil ménager (12) est une machine à laver et le second appareil ménager (14) est un sèche-linge.

10. Système d'appareils ménagers selon la revendication 9, dans lequel le sèche-linge (14) inclut un convertisseur liquide-air (60), un dispositif de chauffage d'air, et un premier conduit d'air délivrant de l'air provenant de l'environnement au dispositif de chauffage d'air pour introduction dans le sèche-linge, le convertisseur liquide-air (60) pouvant être mis en oeuvre pour injecter de manière sélective de la vapeur dans le sèche-linge pendant des opérations de séchage, le convertisseur liquide-air étant en communication à fluide avec la première entrée (46) et adjacent au premier conduit d'air (34) afin de transférer de l'énergie thermique au premier conduit d'air (34).

11. Système d'appareils ménagers selon la revendication 10, comprenant en outre un second conduit d'air, le second conduit d'air reliant la machine à laver (12) au premier conduit d'air (34), le second conduit d'air pouvant être mis en oeuvre pour recevoir l'énergie thermique en provenance de la machine à laver (12) afin de fournir de l'air chauffé au premier conduit d'air.

12. Procédé de réduction de la consommation d'énergie d'un système d'appareils ménagers (10) ayant une pluralité d'appareils ménagers (12, 14) en redistribuant l'énergie thermique entre les appareils ménagers, le procédé comprenant les étapes de :
fourniture d'un générateur d'énergie thermique (32) pouvant être mis en oeuvre pour fournir un fluide porteur d'énergie thermique aux appareils ménagers (12, 14) ;
établissement d'une pluralité de paramètres de cycle pour les appareils ménagers respectifs (12, 14) dans un groupe d'appareils ménagers ;
sélection des paramètres de cycle souhaités et mise en fonction des appareils ménagers (12, 14) selon les paramètres de cycle sélectionnés ; **caractérisé en ce qu'**il comprend en outre
la détection de l'énergie thermique de chacun des appareils ménagers en fonctionnement (12, 14) ;
la détermination si l'énergie thermique en provenance d'un appareil ménager (12, 14) peut être transférée ou partagée avec un autre appareil ménager (12, 14) afin de réduire les charges d'énergie pour mettre en oeuvre les appareils ménagers (12, 14) ; et
la délivrance de l'énergie thermique d'un appareil ménager (12, 14) à un autre afin de réduire les charges d'énergie pour mettre en oeuvre les appareils ménagers (12, 14).

13. Procédé selon la revendication 12, incluant en outre l'étape consistant à fournir un capteur (40, 40a, 40b) pouvant être mis en oeuvre pour détecter l'énergie thermique produite par chacun des appareils ménagers (12, 14) et incluant en outre l'étape consistant à fournir une pompe (52) pouvant être mise en oeuvre pour délivrer de l'énergie thermique en provenance d'un appareil à destination d'un autre.

14. Procédé selon la revendication 12, dans lequel les paramètres de cycle incluent une charge d'énergie thermique calculée pour mettre en oeuvre l'appareil ménager respectif (12, 14) dans le paramètre de cycle sélectionné.

15. Procédé selon la revendication 12, dans lequel le générateur d'énergie thermique est un chauffe-eau (32).
